# EUROPEAN PATENT SPECIFICATION

(11) **EP 3 978 788 B1**
(45) Date of publication and mention of the grant of the patent: **03.01.2024**
(21) Application number: 21196621.3
(22) Date of filing: 14.09.2021
(51) Int. Cl.: F16K 15/03, F16K 27/02

(54) **CHECK VALVE AND PROCESS FOR ASSEMBLYING THE SAME**
RÜCKSCHLAGVENTIL UND VERFAHREN ZU DESSEN ZUSAMMENBAU
CLAPET ANTI RETOUR ET PROCÉDÉ POUR L'ASSEMBLER

(30) Priority: 30.09.2020 IT 202000023116
(43) Date of publication of application: 06.04.2022
(73) Proprietor: Cimberio Holding S.p.A., 20121 Milano (MI) (IT)
(72) Inventor: CIMBERIO, Roberto, 28010 AMENO FRAZ. VACCIAGO (NO) (IT); GUIDETTI, Tiziano, 28021 BORGOMANERO (NO) (IT)
(74) Representative: PGA S.p.A.

(56) References cited:
- DE-U1- 8 903 347
- FR-A5- 2 067 705
- JP-U- S6 085 671
- US-A- 4 141 381

## Description

### FIELD OF THE INVENTION

The present invention relates to a check valve as well as to an assembly process thereof.

The invention finds, for example, application in hydraulic and/or thermo-hydraulic systems for the distribution of liquids.

### STATE OF THE ART

As is well known, there are check valves on the market that allow fluid to flow in only one direction.

A check valve, described in claim FR2067705A5, includes a shutter pivotally engaged to the valve body thanks to a pin to allow the rotation of the shutter itself relatively to the valve body from a closed position, reached following the action of a spring pushing on the shutter, in which the latter prevents the backflow of fluid from an outlet towards an inlet of the valve body, to an open position, in which the shutter vice versa allows the advancement of fluid from the inlet to the outlet of the valve body. A problem shown by this type of valves is caused by the use of a pin insertable from outside the valve body. This makes it necessary to define an insertion opening for the pin on the valve body, and, necessarily, requires the provision of seals between the pin and the valve body, increasing the number of stages in the production process, the overall production costs and reducing the operational reliability of the valve.

Another known type of check valve is described in US9027593B2 and comprises a hook removably mounted to the valve body and configured to support a shutter. In particular, the shutter is engaged to the hook by means of an end opening present on a support tab having also a second end opening configured to receive, in removable engagement, a central protuberance carried by the valve body. Although the solution just described solves the problem of valves with a pin passing through the valve body, it is worth noting the extreme constructive complexity of the check valve described in US9027593B2. On the other hand, US4141381A shows a swing check valve with valve body holding a seal ring and a swingable check valve disc supported by a high strength wire.

### OBJECT OF THE INVENTION

It is therefore an object of the present invention to solve at least one of the drawbacks and/or limitations of the previous solutions.

A first object of the present invention is to provide a check valve presenting a minimum number of components and presenting a minimum number of openings on the valve body that could cause fluid leakage.

It is further an object of the present invention to provide a check valve whose components can be easily made by known industrial processes, for example by working on a lathe.

It is then an object of the present invention to make available a process for assembling a check valve which is efficient and easy to implement.

It is a further object of the present invention to provide a valve which has a high degree of reliability and which requires a reduced number of maintenance interventions.

These objects and others, which will more fully appear from the following description, are substantially achieved by a valve in accordance with one or more of the attached claims .

### SUMMARY

A valve according to the invention is disclosed in any one of claims 1-13, while a process of assembling a fluid interception valve is disclosed in claim 14 or 15.

### BRIEF DESCRIPTION OF THE DRAWINGS

Some embodiments and some aspects of the invention will be hereafter described with reference to the attached drawings, provided for only indicative, and therefore not limiting, purposes, in which:
- Figure 1 is an exploded perspective view of a valve in accordance with the present invention;
- Figures 2 and 3 are, respectively, perspective views of a shutter and a connection element that can be associated with it;
- Figure 4 is a perspective view of the connection element in engagement to the shutter;
- Figure 5 is a partially cross-sectional perspective view of the valve in accordance with the present invention;
- Figures 6 and 7 are longitudinal cross-sectional views of the valve in accordance with the present invention in which a shutter is shown in a closed condition and an open condition, respectively.

### DETAILED DESCRIPTION

### Valve

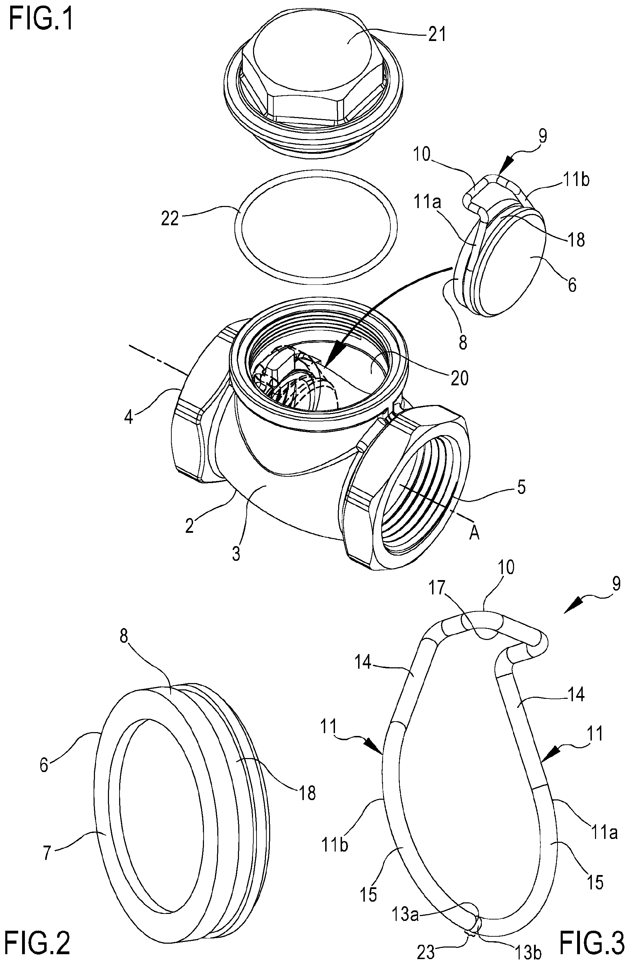

A valve according to the present invention, which can be used for example in hydraulic and/or thermohydraulic systems for fluid distribution, has been collectively referred to as 1. As illustrated for example in Figures 1, 5-7, the valve 1 comprises a valve body 2 presenting at least one channel 3 extending along a predetermined longitudinal development direction A and arranged in fluid communication between an inlet 4 and an outlet 5. In the preferred embodiment, the inlet 4 and the outlet 5 have an externally or internally threaded portion as shown in the attached figures, so as to allow the valve body 2 to be engaged with piping. Although in the present description reference is made to a valve of the two-way type and therefore with a single channel 3, it is not excluded that the valve may have three or more ways and therefore more than one channel 3. It is further useful to note that the valve body 2 may be made in one piece in metallic material, in plastic material or in composite material.

The valve body 2 further comprises at least one projection 12, emerging from an internal wall of the same valve body 2 and extending internally to the channel 3, configured to engage with at least part of a connection element 9. As visible from the attached figures, the projection 12 has a substantially prismatic conformation with a polygonal section, for example rectangular or square; the projection is counter-shaped to a slot or to a part of a slot (a semi-slot, for example) 17 formed by the connection element 9. The projection 12, in cooperation with the valve body, defines a hinging seat 16 configured to accommodate a portion of the connection element 9 and to pivotally engage the latter to the valve body 2. In other words, the projection 12 prevents translation of the connection element 9 along a direction concordant with the direction of longitudinal development of the channel 3, or along a direction transverse or normal to the same direction of longitudinal development of the channel 3. The presence of two or more projections 12 emerging from the valve body 2, for example arranged side by side and always configured to engage the connection element 9 to the same valve body 2, substantially in the manner described above, is not excluded. The projection(s) 12 is/are joined in one piece to the valve body 2.

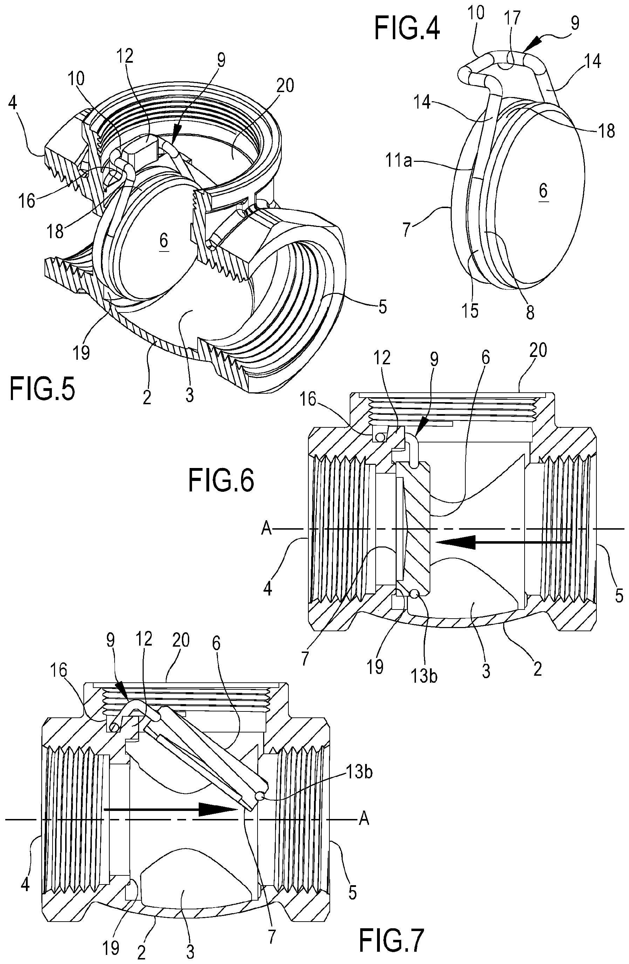

As for example shown in figures 5-7, the valve body 2 may further comprise at least one abutment seat 19 disposed in correspondence with the channel 3 and configured to define, in cooperation with a shutter 6, a fluid-tight closure. In particular, as shown in Figures 5 and 6, the fluid-tight closure may be achieved following the abutment of the shutter 6 to the abutment seat 19. From a geometric point of view, the abutment seat 19 has a circular crown conformation extending transversally to the direction of longitudinal development A of the channel 3 to delimit at least one shoulder, the latter defined on an internal surface of the channel 3. The shoulder therefore allows to receive in abutment at least one operative surface 7 of the shutter 6 to define a fluid-tight closure and prevent the passage of the fluid from the outlet 5 to the inlet 4 of the valve body 2.

The valve 1 may further comprise at least one access opening 20, for example shown in figures 1 and 5, defined on the valve body 2 and disposed in correspondence of the channel 3 to put the same channel 3 in communication with the external environment. In particular, the access opening 20 is facing the projection 12 of the valve body in order to allow an external user, during an assembly condition of the valve, to insert and/or extract the connection element 9 and the shutter from the valve body 2. The access opening therefore has a larger diameter with respect to a maximum size of the assembly formed by connection element 9 and shutter. As visible in the attached figures, the access opening 20 has an internally threaded portion so as to allow engagement of the valve body 2 with a cap 21, the latter being removably engaged to valve body 2 to define a fluid-tight closure of the access opening 20. In particular, the valve comprises a sealing ring 22 interposed between the same access opening 20 and the cap 21 to seal the access opening 20.

The valve further comprises at least one shutter 6 of the type shown in Figures 2 and 6, disposed, under operating conditions of the valve 6, within the valve body 2. In particular, the shutter 6 comprises at least one operating surface 7 configured to intercept the fluid passing through the valve body 2 and to define, in at least one closing position of the shutter and in cooperation with the abutment seat 19, a fluid-tight closure on the channel 3. In other words, an outer perimeter area of the operative surface 7 rests on the shoulder of the abutment seat 19 to define the fluid-tight closure. The shutter 6 further comprises at least one lateral wall 8 extending transversely to the operative surface 7 on which a groove 18 is preferably defined, the latter configured to engage with at least part of the connection element 9. The shutter may thus have a substantially discoidal conformation, wherein the groove 18 extends along an entire perimeter edge of the lateral wall 8 and is countershaped to a base portion 11 of the connection element 9, defining a removable engagement with the latter.

The shutter 6, as a result of engagement with and by means of the connection element 9, is movable between a closed position (figure 6) in which the operative surface 7 of the shutter 6 is arranged to prevent fluid from passing through the channel 3, and an open position (figure 7) in which the operating surface 7 allows fluid to pass between the inlet 4 and the outlet 5 of the valve body 2. The shutter 6 is thus movable by rotation with respect to the hinging seat 16 together with the connection element 9. In particular, the shutter 6, in the closed position, prevents passage of the fluid from the outlet 5 towards the inlet 4 of the valve body 6 thereby defining a check valve, useful to allow movement of fluid in a single direction only between the inlet 4 and the outlet 5 of the valve body. In other words, the pressure exerted on the shutter by the fluid at the inlet of the valve body, allows movement of the shutter in the open position, allowing passage of fluid from the inlet 4 towards the outlet 5. Vice versa, a possible flow in the opposite direction, i.e. directly from the outlet to the inlet of the valve, determines a hydraulic action on the valve shutter 6 that allows movement of the shutter in the closed position and therefore the abutment of the same shutter 6 to the shoulder of the seat 19, defining a fluid tight closure of the channel 3 and preventing a backflow of fluid from the outlet 5 to the inlet 4.

As previously mentioned, the valve comprises at least one connection element 9 having at least a top portion 10 engaged, under operating conditions of the valve, within the hinging seat 16, as well as a base portion 11 removably engaged to the shutter 6.

It is useful to note that the connection element 9 can be obtained by bending a single elongated body, for example made of a metallic material, to define the top portion 10 and the base portion 11. The elongated body has a predetermined length and has a constant cross-sectional shape, for example, circular. In particular, from a dimensional point of view, the ratio between the maximum overall dimension of the cross-section of the elongated body forming the connection element 9 and the length of the elongated body itself is less than 0.05, even more particularly between 0.01 and 0.05, in particular between 0.015 and 0.030.

The elongated body may further have a first and second end 13a, 13b that are distinct from each other and spaced apart by at least one intermediate space 23 which gives the base portion 11 the ability to spread apart to allow for an easy removable engagement of the base portion 11 with the shutter 6.

From a structural point of view, the top portion 10 has a substantially convex shape shaped like a "C" or "U" emerging transversally with respect to the base portion 11 to delimit the slot or semi-slot 17, the latter being configured to receive in insertion at least part of the projection 12 of the valve body. In other words, the slot or semi-slot 17 allows the connection element 9 to be housed within the hinging seat 16 to perform the movement of the shutter between the open position and the closed position.

The base portion 11 may in turn comprise a first and a second arm 11a, 11b. Each of the arms 11a, 11b extends transversely from respective opposing ends of the top portion 10 and terminates at the first and second ends 13a, 13b of the elongated body. In detail, the first and second arms 11a, 11b present respective rectilinear sections diverging or parallel to each other emerging from the top portion 10, as well as respective curvilinear sections 15, converging to each other in approaching the intermediate space 23. It is therefore useful to note that the described geometric conformation of the first and second arms 11a, 11b confers to the connection element the ability to elastically divide and deform in order to allow the removable engagement of the same first and second arms 11a, 11b within the groove 18 of the shutter 6.

### Assembling process

It is also an object of the present invention to provide a process of assembling a fluid interception valve in accordance with the above description and/or in accordance with any of the appended claims.

The process includes arranging the valve body with cap 21 disengaged from the access opening 20. The process may further comprise a step of engaging the base portion 11 of the connection element 9 to the lateral wall 8 of the shutter. In detail, said engagement step comprises divaricating the first and second arms 11a, 11b of the base portion 11 of the connection element 9 by elastically deforming the first and second arms 11a, 11b. By spreading of the first and second arms 11a, 11b is meant a step, performed automatically by a machine or manually by an operator, aimed at distancing the first and second arms 11a, 11b from each other and allowing the said arms to be housed inside the groove 18 of the shutter 6.

The process further comprises a step of engaging the connection element 9 and the shutter 6 thus coupled within the valve body 2 through the access opening 20, as well as a step of engaging the top portion 10 of the connection element 9 within the hinging seat 16 defined on the valve body 2.

The process may comprise a step of engaging the cap 21 to the valve body to define a fluid-tight closure of the access opening 20, thereby preventing leakage through the access opening 20 of fluid passing in the channel 3. In particular, it is useful to note that this last step of engaging the cap 21 to the valve body may comprise a step of interposing the sealing ring 22 between the access opening 20 and the same cap 21 to allow the definition of a fluid-tight closure between the access opening 20 and the cap 21.

## Claims

1. Fluid interception valve comprising:
- at least one valve body (2) having at least one inlet (4), at least one outlet (5) and at least one channel (3) which places in fluid communication the inlet (4) with the outlet (5),
- at least one shutter (6) arranged within the valve body (2) and comprising:
∘ at least one operative surface (7) configured for intercepting fluid crossing the valve body (2),
∘ at least one lateral wall (8) extending transversely to the operative surface (7),
- at least one connection element (9) comprising at least one top portion (10) engaged with the valve body (2);
wherein said connection element (9) comprises at least one base portion (11) engaged with the lateral wall (8) of the shutter (6);
wherein the connection element (9) is a body separated from the shutter (6);
wherein at least the base portion (11) of the connection element (9) is removably engaged with the lateral wall (8) of the shutter (6);
wherein the top portion (10) of the connection element (9) emerges transversely with respect to the base portion (11),
**characterized in that**
said top portion (10) has a convex shape configured for insertingly receiving at least one projection (12) emerging from an internal wall of the valve body (2);
wherein said projection (12) is integrally formed with the valve body (2) and arranged within the latter, said projection (12) defining, in cooperation with the valve body (2), a hinging seat (16) configured for housing the top portion (10) of the connection element (9) and pivotally constraining the latter to the valve body (2).

2. Valve according to the preceding claim, wherein the top portion (10) of the connection element (9) emerges orthogonally with respect to the base portion (11), said top portion (10) having a substantially C-shaped or U-shaped convex shape.

3. Valve according to any one of the preceding claims, wherein the connection element (9) is a single elongated body defining said top portion (10) and said base portion (11).

4. Valve according to claim 3, wherein the elongated body of the connection element (9) has a first and a second end (13a, 13b) that are separate from each other and spaced from at least one intermediate space (23), conferring the base portion (11) with the capacity to spread apart, optionally by elastic deformation, so as to allow the engagement, optionally the removable engagement, of the same base portion (11) with the lateral wall (8) of the shutter (6).

5. Valve according to claim 4, wherein the base portion (11) comprises a first and a second arm (11a, 11b), each first and second arm (11a, 11b) extended from a respective opposite end of the top portion (10), wherein the first arm (11a) terminates at the first end (13a) of the elongated body while the second arm (11b) terminates at the second end (13b) of the elongated body.

6. Valve according to claim 4 or 5, wherein the connection element (9) has symmetric structure with respect to an ideal symmetry plane intersecting the top portion (10) and crossing said intermediate space (23).

7. Valve according to claim 4 or 5 or 6, wherein the first and the second arm (11a, 11b) have a respective rectilinear section (14) and a respective curvilinear section (15) extended in continuation of said rectilinear section (14); the rectilinear sections (14) diverging from each other, or extending parallel to each other, in moving away from the top portion (10), and the curvilinear sections (15) converging with respect to each other, in approaching the intermediate space (23).

8. Valve according to any one of claims 4-7, wherein the elongated body forming the connection element (9) has a constant cross section, optionally circular, said cross section having a maximum overall size, and
wherein the ratio between said maximum overall size of said cross section, optionally the diameter of the cross section itself when such section has circular shape, and a length of the elongated body is smaller than 0.05, optionally comprised between 0.01 and 0.05, still more optionally comprised between 0.015 and 0.030;

9. Valve according to any one of the preceding claims, wherein the connection element (9) is obtained by means of bending a wire or an elongated bar, optionally wherein the wire or the elongated bar are made of metallic material.

10. Valve according to any one of the preceding claims, , wherein the projection (12) is counter-shaped with respect to a slot or semi-slot (17) delimited by the top portion (10) of the connection element (9) in order to be inserted in the same top portion (10).

11. Valve according to any one of the preceding claims, wherein the shutter (6) comprises at least one groove (18) defined on the lateral wall (8) of the shutter (6) and configured for receiving in engagement at least part of the base portion (11) of the connection element (9);
wherein the shutter (6) has a symmetric structure with respect to an ideal symmetry plane substantially orthogonal to the operative surface (7) of the same shutter (6), optionally said shutter (6) having substantially discoid shape; and
wherein the groove (18) is at least partly counter-shaped with respect to the base portion (11) of the connection element (9), said groove (18) preferably extending along the entire perimeter edge of the lateral wall (8) of the shutter (6).

12. Valve according to any one of the preceding claims, wherein the connection element (9) and the shutter (6) are movable via rotation, relative to the valve body (2), in order to bring the shutter (6) at least in:
- a closed position wherein the operative surface (7) of the shutter (6) is arranged for preventing the transit of the fluid in the channel (3) of the valve body (2);
- an open position wherein the operative surface (7) of the shutter (6) is arranged for allowing the transit of the fluid between the inlet (4) and the outlet (5) of the valve body (2);
wherein the valve body (2) has an abutment seat (19) arranged at the channel (3) of the valve body (2) and configured for receiving in abutment, in the closed position of the shutter (6), at least part of the operative surface (7) of the same shutter (6);
wherein the abutment seat (19), which preferably has circular crown shape, extends transverse to an ideal axis of the channel (3), said abutment seat (19) delimiting at least one shoulder on an internal surface of the channel (3) adapted to define, in cooperation with the shutter (6) and in the closed position of the latter, a fluid-tight closure;
wherein the valve is a check valve and wherein the shutter (6), in said closed position, is configured for preventing the fluid to transit from the outlet (5) to the inlet (4) of the valve body (2);
preferably wherein said operative surface (7) is an operative surface (7) made of metal or of rubber.

13. Valve according to any one of the preceding claims comprising:
an access opening (20), directly facing the shutter (6) and the connection element (9), configured for allowing the insertion and/or the extraction of the connection element (9) and of the shutter (6) from the valve body (2); and
at least one cap (21) engaged removably and with fluid-tight seal to the valve body (2), in particular with interposition of a sealing ring (22).

14. Process of assembling a fluid interception valve according to claim 13, said process comprising the following steps:
- engaging the base portion (11) of the connection element (9) with the lateral wall (8) of the shutter (6),
- inserting the connection element (9) and the shutter (6) within the valve body (2) through the access opening (20),
- engaging the top portion (10) of the connection element (9) with the valve body (2);
in particular wherein the step of engaging the base portion (11) of the connection element (9) with the lateral wall (8) of the shutter (6) comprises the following sub-steps:
- spreading out first and the second arm (11a, 11b) of the base portion (11) of the connection element (9),
- removably engaging via elastic deformation said first and second arm (11a, 11b) within the groove (18) of the shutter (6).

15. Process according to claim 14 of assembling an interception valve in accordance with claim 12, wherein a step is provided for removing the cap (21) in order to allow inserting the connection element (9) and the shutter (6) within the valve body (2) and a step of engaging the cap (21) with the valve body (2) to define a fluid-tight closure of the access opening (20), optionally wherein the step of engaging the cap (21) on the valve body (2) provides for the interposition of a sealing ring (22);
in particular wherein the step of engaging the top portion (10) with the valve body (2) comprises the sub-step of housing the same top portion (10) within a/the hinging seat (16) delimited by a/the projection (12) inside the valve body.

## Patentansprüche

1. Fluid-Abfangventil, umfassend:
- wenigstens einen Ventilkörper (2), welcher wenigstens einen Einlass (4), wenigstens einen Auslass (5) und wenigstens einen Kanal (3) aufweist, welcher den Einlass (4) in Fluidkommunikation mit dem Auslass (5) setzt,
- wenigstens einen Verschluss (6), welcher innerhalb des Ventilkörpers (2) angeordnet ist und umfasst:
∘ wenigstens eine Wirkfläche (7), welche dazu eingerichtet ist, Fluid abzufangen, welches den Ventilkörper (2) kreuzt,
∘ wenigstens eine laterale Wand (8), welche sich transversal zu der Wirkfläche (7) erstreckt,
- wenigstens ein Verbindungselement (9), welches wenigstens einen oberen Abschnitt (10) umfasst, welcher mit dem Ventilkörper (2) in Eingriff steht;
wobei das Verbindungselement (9) wenigstens einen Basisabschnitt (11) umfasst, welcher mit der lateralen Wand (8) des Verschlusses (6) in Eingriff steht;
wobei das Verbindungselement (9) ein Körper ist, welcher von dem Verschluss (6) getrennt ist;
wobei wenigstens der Basisabschnitt (11) des Verbindungselements (9) lösbar mit der lateralen Wand (8) des Verschlusses (6) in Eingriff steht;
wobei der obere Abschnitt (10) des Verbindungselements (9) transversal in Bezug auf den Basisabschnitt (11) hervortritt,
**dadurch gekennzeichnet, dass**
der obere Abschnitt (10) eine konvexe Form aufweist, welche dazu eingerichtet ist, wenigstens einen Vorsprung (12), welcher von einer inneren Wand des Ventilkörpers (2) hervortritt, in einer einsetzbaren Weise aufzunehmen;
wobei der Vorsprung (12) integral mit dem Ventilkörper (2) gebildet ist und innerhalb des letzteren angeordnet ist,
wobei der Vorsprung (12), in Zusammenwirkung mit dem Ventilkörper (2), einen Gelenksitz (16) definiert, welcher dazu eingerichtet ist, den oberen Abschnitt (10) des Verbindungselements (9) aufzunehmen und den letzteren schwenkbar mit dem Ventilkörper (2) in Verbindung zu bringen.

2. Ventil nach dem vorhergehenden Anspruch, wobei der obere Abschnitt (10) des Verbindungselements (9) orthogonal in Bezug auf den Basisabschnitt (11) hervortritt, wobei der obere Abschnitt (10) eine im Wesentlichen C-förmige oder U-förmige konvexe Form aufweist.

3. Ventil nach einem der vorhergehenden Ansprüche, wobei das Verbindungselement (9) ein einzelner länglicher Körper ist, welcher den oberen Abschnitt (10) und den Basisabschnitt (11) definiert.

4. Ventil nach Anspruch 3, wobei der längliche Körper des Verbindungselements (9) ein erstes und ein zweites Ende (13a, 13b) aufweist, welche getrennt voneinander sind und von wenigstens einem Zwischenraum (23) beabstandet sind, wobei dem Basisabschnitt (11) die Fähigkeit verliehen ist, sich auszubreiten, optional durch elastische Deformation, um den Eingriff, optional den lösbaren Eingriff, des gleichen Basisabschnitts (11) mit der lateralen Wand (8) des Verschlusses (6) zu erlauben.

5. Ventil nach Anspruch 4, wobei der Basisabschnitt (11) einen ersten und einen zweiten Arm (11a, 11b) umfasst, wobei sich jeder erste und jeder zweite Arm (11a, 11b) von einem jeweiligen entgegengesetzten Ende des oberen Abschnitts (10) erstreckt, wobei der erste Arm (11a) an dem ersten Ende (13a) des länglichen Körpers endet, während der zweite Arm (11b) an dem zweiten Ende (13b) des länglichen Körpers endet.

6. Ventil nach Anspruch 4 oder 5, wobei das Verbindungselement (9) eine symmetrische Struktur in Bezug auf eine ideale Symmetrieebene aufweist, welche den oberen Abschnitt (10) schneidet und den Zwischenraum (23) kreuzt.

7. Ventil nach Anspruch 4 oder 5 oder 6, wobei der erste und der zweite Arm (11a, 11b) einen jeweiligen geradlinigen Abschnitt (14) und einen jeweiligen gekrümmten Abschnitt (15) aufweisen, welcher sich in Fortsetzung des geradlinigen Abschnitts (14) erstreckt; wobei die geradlinigen Abschnitte (14), bei einem Wegbewegen von dem oberen Abschnitt (10), voneinander divergieren oder sich parallel zueinander erstrecken, und die gekrümmten Abschnitte (15), bei einem Annähern an den Zwischenraum (23), zueinander konvergieren.

8. Ventil nach einem der Ansprüche 4-7, wobei der längliche Körper, welcher das Verbindungselement (9) bildet, einen konstanten, optional kreisförmigen, Querschnitt aufweist, wobei der Querschnitt eine maximale Gesamtgröße aufweist, und
wobei das Verhältnis zwischen der maximalen Gesamtgröße des Querschnitts, optional dem Durchmesser des Querschnitts selbst, wenn ein solcher Querschnitt eine kreisförmige Form aufweist, und einer Länge des länglichen Körpers kleiner als 0,05 ist, optional zwischen 0,01 und 0,05 umfasst ist, noch weiter optional zwischen 0,015 und 0,030 umfasst ist.

9. Ventil nach einem der vorhergehenden Ansprüche, wobei das Verbindungselement (9) mittels eines Biegens eines Drahtes oder einer länglichen Stange erhalten wird, wobei der Draht oder die längliche Stange optional aus einem metallischen Material hergestellt ist.

10. Ventil nach einem der vorhergehenden Ansprüche, wobei der Vorsprung (12) gegengeformt in Bezug auf eine Aussparung oder eine Semi-Aussparung (17) ist, welche durch den oberen Abschnitt (10) des Verbindungselements (9) begrenzt ist, um in den gleichen oberen Abschnitt (10) eingesetzt zu werden.

11. Ventil nach einem der vorhergehenden Ansprüche, wobei der Verschluss (6) wenigstens eine Nut (18) umfasst, welche an der lateralen Wand (8) des Verschlusses (6) definiert ist und dazu eingerichtet ist, wenigstens einen Teil des Basisabschnitts (11) des Verbindungselements (9) in Eingriff aufzunehmen;
wobei der Verschluss (6) eine symmetrische Struktur in Bezug auf eine ideale Symmetrieebene aufweist, welche im Wesentlichen orthogonal zu der Wirkfläche (7) des gleichen Verschlusses (6) ist, wobei der Verschluss (6) optional eine im Wesentlichen scheibenförmige Form aufweist; und
wobei die Nut (18) wenigstens teilweise gegengeformt in Bezug auf den Basisabschnitt (11) des Verbindungselements (9) ist, wobei sich die Nut (18) vorzugsweise entlang des gesamten Umfangsrandes der lateralen Wand (8) des Verschlusses (6) erstreckt.

12. Ventil nach einem der vorhergehenden Ansprüche, wobei das Verbindungselement (9) und der Verschluss (6) über eine Rotation bewegbar relativ zu dem Ventilkörper (2) sind, um den Verschluss (6) wenigstens in folgende zu bringen:
- eine geschlossene Position, wobei die Wirkfläche (7) des Verschlusses (6) derart angeordnet ist, dass sie die Durchquerung des Fluids in dem Kanal (3) des Ventilkörpers (2) verhindert;
- eine offene Position, wobei die Wirkfläche (7) des Verschlusses (6) derart angeordnet ist, dass sie die Durchquerung des Fluids zwischen dem Einlass (4) und dem Auslass (5) des Ventilkörpers (2) erlaubt;
wobei der Ventilkörper (2) einen Anlagesitz (19) aufweist, welcher an den Kanal (3) des Ventilkörpers (2) angeordnet ist und dazu eingerichtet ist, in der geschlossenen Position des Verschlusses (6) wenigstens einen Teil der Wirkfläche (7) des gleichen Verschlusses (6) in Anlage aufzunehmen;
wobei sich der Anlagesitz (19), welcher vorzugsweise eine kreisförmige Kronenform aufweist, transversal zu einer idealen Achse des Kanals (3) erstreckt, wobei der Anlagesitz (19) wenigstens eine Schulter an einer inneren Fläche des Kanals (3) begrenzt, welche dazu eingerichtet ist, in Zusammenwirkung mit dem Verschluss (3) und in der geschlossenen Position des letzteren, ein fluid-dichtes Verschließen zu definieren;
wobei das Ventil ein Rückschlagventil ist und wobei der Verschluss (6), in der geschlossenen Position, dazu eingerichtet ist, zu verhindern, dass das Fluid von dem Auslass (5) zu dem Einlass (4) des Ventilkörpers (2) durchquert;
wobei vorzugsweise die Wirkfläche (7) eine Wirkfläche (7) ist, welche aus Metall oder aus Kautschuk hergestellt ist.

13. Ventil nach einem der vorhergehenden Ansprüche, umfassend: eine Zugangsöffnung (20), welche dem Verschluss (6) und dem Verbindungselement (9) direkt zugewandt ist und dazu eingerichtet ist, das Einsetzen und/oder das Herausnehmen des Verbindungselements (9) und des Verschlusses (6) von dem Ventilkörper (2) zu erlauben; und
wenigstens eine Kappe (21), welche lösbar und mit einer fluid-dichten Abdichtung mit dem Ventilkörper (2), insbesondere mit Zwischenschaltung eines Dichtungsringes (22), in Eingriff steht.

14. Verfahren eines Zusammensetzens eines Fluid-Abfangventils nach Anspruch 13, wobei das Verfahren die folgenden Schritte umfasst:
- Ineingriffbringen des Basisabschnitts (11) des Verbindungselements (9) mit der lateralen Wand (8) des Verschlusses (6),
- Einsetzen des Verbindungselements (9) und des Verschlusses (6) innerhalb des Ventilkörpers (2) durch die Zugangsöffnung (20),
- Ineingriffbringen des oberen Abschnitts (10) des Verbindungselements (9) mit dem Ventilkörper (2);
insbesondere wobei der Schritt des Ineingriffbringens des Basisabschnitts (11) des Verbindungselements (9) mit der lateralen Wand (8) des Verschlusses (6) die folgenden unterschritte umfasst:
- Ausbreiten des ersten und des zweiten Arms (11a, 11b) des Basisabschnitts (11) des Verbindungselements (9),
- lösbar Ineingriffbringen über elastische Deformation des ersten und des zweiten Arms (11a, 11b) innerhalb der Nut (18) des Verschlusses (6).

15. Verfahren nach Anspruch 14 eines Zusammensetzens eines Fluid-Abfangventils nach Anspruch 12, wobei ein Schritt zum Entfernen der Kappe (21) bereitgestellt ist, um ein Einsetzen des Verbindungselements (9) und des Verschlusses (6) innerhalb des Ventilkörpers (2) zu erlauben, und ein Schritt eines Ineingriffbringens der Kappe (21) mit dem Ventilkörper (2), um ein fluid-dichtes Verschließen der Zugangsöffnung (20) zu definieren, wobei optional der Schritt des Ineingriffbringens der Kappe (21) an dem Ventilkörper (2) die Zwischenschaltung eines Dichtungsrings (22) vorsieht; insbesondere wobei der Schritt des Ineingriffbringens des oberen Abschnitts (10) mit dem Ventilkörper (2) den Unterschritt eines Aufnehmens des gleichen oberen Abschnitts (10) innerhalb eines/des Gelenksitzes (16) umfasst, welcher durch einen/den Vorsprung (12) innerhalb des Ventilkörpers begrenzt ist.

## Revendications

1. Soupape d'interception de fluide comprenant :
- au moins un corps de soupape (2) ayant au moins un orifice d'entrée (4), au moins un orifice de sortie (5) et au moins un canal (3) qui place en communication fluidique l'orifice d'entrée (4) avec l'orifice de sortie (5),
- au moins un obturateur (6) disposé à l'intérieur du corps de soupape (2) et comprenant :
∘ au moins une surface fonctionnelle (7) conçue pour intercepter un fluide traversant le corps de soupape (2),
∘ au moins une paroi latérale (8) s'étendant de manière transversale à la surface fonctionnelle (7),
- au moins un élément de raccordement (9) comprenant au moins une portion supérieure (10) engagée avec le corps de soupape (2) ;
ledit élément de raccordement (9) comprenant au moins une portion de base (11) engagée avec la paroi latérale (8) de l'obturateur (6) ;
l'élément de raccordement (9) étant un corps séparé de l'obturateur (6) ;
au moins la portion de base (11) de l'élément de raccordement (9) étant engagée de manière amovible avec la paroi latérale (8) de l'obturateur (6) ;
la portion supérieure (10) de l'élément de raccordement (9) émergeant transversalement par rapport à la portion de base (11),
**caractérisée en ce que**
ladite portion supérieure (10) présente une forme convexe conçue pour recevoir par insertion au moins une projection (12) émergeant d'une paroi interne du corps de soupape (2) ;
ladite projection (12) étant intégralement solidaire du corps de soupape (2) et disposée à l'intérieur de ce dernier,
ladite projection (12) définissant, en coopération avec le corps de soupape (2), une assise d'articulation (16) conçue pour loger la portion supérieure (10) de l'élément de raccordement (9) et contraignant de manière à pouvoir pivoter ce dernier au corps de soupape (2).

2. Soupape selon la revendication précédente, la portion supérieure (10) de l'élément de raccordement (9) émergeant orthogonalement par rapport à la portion de base (11), ladite portion supérieure (10) ayant une forme convexe sensiblement en forme de C ou en forme de U.

3. Soupape selon l'une quelconque des revendications précédentes, l'élément de raccordement (9) étant un corps allongé unique définissant ladite portion supérieure (10) et ladite portion de base (11).

4. Soupape selon la revendication 3, le corps allongé de l'élément de raccordement (9) ayant une première et une seconde extrémité (13a, 13b) qui sont séparées l'une de l'autre et espacées d'au moins un espace intermédiaire (23), conférant à la portion de base (11) la capacité de s'écarter, éventuellement par déformation élastique, afin de permettre l'engagement, éventuellement l'engagement de manière amovible, de la même portion de base (11) avec la paroi latérale (8) de l'obturateur (6).

5. Soupape selon la revendication 4, la portion de base (11) comprenant un premier et un second bras (11a, 11b), chaque premier et second bras (11a, 11b) étendu depuis une extrémité opposée respective de la portion supérieure (10), le premier bras (11a) se terminant à la première extrémité (13a) du corps allongé tandis que le second bras (11b) se terminant à la seconde extrémité (13b) du corps allongé.

6. Soupape selon la revendication 4 ou 5, l'élément de raccordement (9) ayant une structure symétrique par rapport à un plan de symétrie idéal en intersection avec la portion supérieure (10) et traversant ledit espace intermédiaire (23).

7. Soupape selon la revendication 4 ou 5 ou 6, le premier et le second bras (11a, 11b) ayant une section rectiligne (14) respective et une section curviligne (15) respective étendue en continuation de ladite section rectiligne (14) ; les sections rectilignes (14) divergeant l'une de l'autre, ou s'étendant parallèles l'une à l'autre, en s'éloignant de la portion supérieure (10), et les sections curvilignes (15) convergeant l'une par rapport à l'autre, en s'approchant de l'espace intermédiaire (23).

8. Soupape selon l'une quelconque des revendications 4 à 7, le corps allongé formant l'élément de raccordement (9) ayant une section transversale constante, éventuellement circulaire, ladite section transversale ayant une taille globale maximale, et
le ratio entre ladite taille globale maximale de ladite section transversale, éventuellement le diamètre de la section transversale elle-même lorsque ladite section présente une forme circulaire, et une longueur du corps allongé étant inférieur à 0,05, éventuellement compris entre 0,01 et 0,05, encore plus éventuellement compris entre 0,015 et 0,030.

9. Soupape selon l'une quelconque des revendications précédentes, l'élément de raccordement (9) étant obtenu par flexion d'un fil ou d'une barre allongée, éventuellement le fil ou la barre allongée étant constitué·e d'un matériau métallique.

10. Soupape selon l'une quelconque des revendications précédentes, la projection (12) étant en contre-forme par rapport à une fente ou une demi-fente (17) délimitée par la portion supérieure (10) de l'élément de raccordement (9) afin d'être insérée dans la même portion supérieure (10).

11. Soupape selon l'une quelconque des revendications précédentes, l'obturateur (6) comprenant au moins une rainure (18) définie sur la paroi latérale (8) de l'obturateur (6) et conçue pour recevoir en engagement au moins une partie de la portion de base (11) de l'élément de raccordement (9) ;
l'obturateur (6) ayant une structure symétrique par rapport à un plan de symétrie idéal sensiblement orthogonal à la surface fonctionnelle (7) du même obturateur (6), éventuellement ledit obturateur (6) ayant une forme sensiblement discoïdale ; et
la rainure (18) étant au moins partiellement en contre-forme par rapport à la portion de base (11) de l'élément de raccordement (9), ladite rainure (18) s'étendant préférablement le long du bord dans le périmètre entier de la paroi latérale (8) de l'obturateur (6).

12. Soupape selon l'une quelconque des revendications précédentes, l'élément de raccordement (9) et l'obturateur (6) étant mobiles par rotation, par rapport au corps de soupape (2), afin de porter l'obturateur (6) au moins dans :
- une position fermée lorsque la surface fonctionnelle (7) de l'obturateur (6) est agencée pour empêcher le transit du fluide dans le canal (3) du corps de soupape (2) ;
- une position ouverte dans laquelle la surface fonctionnelle (7) de l'obturateur (6) est agencée pour permettre le transit du fluide entre l'orifice d'entrée (4) et l'orifice de sortie (5) du corps de soupape (2) ;
le corps de soupape (2) ayant une assise de butée (19) disposée au niveau du canal (3) du corps de soupape (2) et conçue pour recevoir en butée, dans la position fermée de l'obturateur (6), au moins une partie de la surface fonctionnelle (7) du même obturateur (6) ;
l'assise de butée (19), qui présente préférablement une forme de couronne circulaire, s'étend transversalement à un axe idéal du canal (3), ladite assise de butée (19) délimitant au moins un épaulement sur une surface interne du canal (3) adapté pour définir, en coopération avec l'obturateur (6) et dans la position fermée de ce dernier, une fermeture hermétique aux fluides ;
la soupape étant un clapet anti-retour et l'obturateur (6), dans ladite position fermée, étant conçu pour empêcher le fluide de transiter depuis l'orifice de sortie (5) vers l'orifice d'entrée (4) du corps de soupape (2) ;
préférablement ladite surface fonctionnelle (7) étant une surface fonctionnelle (7) constituée de métal ou de caoutchouc.

13. Soupape selon l'une quelconque des revendications précédentes comprenant :
une ouverture d'accès (20), faisant face directement à l'obturateur (6) et à l'élément de raccordement (9), conçue pour permettre l'insertion et/ou l'extraction de l'élément de raccordement (9) et de l'obturateur (6) du corps de soupape (2) ; et
au moins un capuchon (21) engagé de manière amovible et avec un joint hermétique aux fluides au corps de soupape (2), en particulier par l'interposition d'une bague d'étanchéité (22).

14. Processus d'assemblage d'une soupape d'interception de fluide selon la revendication 13, ledit processus comprenant les étapes suivantes consistant à :
- engager la portion de base (11) de l'élément de raccordement (9) avec la paroi latérale (8) de l'obturateur (6),
- insérer l'élément de raccordement (9) et l'obturateur (6) à l'intérieur du corps de soupape (2) à travers l'ouverture d'accès (20),
- engager la portion supérieure (10) de l'élément de raccordement (9) avec le corps de soupape (2) ;
en particulier l'étape d'engagement de la portion de base (11) de l'élément de raccordement (9) avec la paroi latérale (8) de l'obturateur (6) comprenant les sous-étapes suivantes consistant à:
- écarter le premier et le second bras (11a, 11b) de la portion de base (11) de l'élément de raccordement (9),
- engager de manière amovible par déformation élastique lesdits premier et second bras (11a, 11b) à l'intérieur de la rainure (18) de l'obturateur (6).

15. Processus selon la revendication 14 d'assemblage d'une soupape d'interception selon la revendication 12, une étape étant prévue de retrait du capuchon (21) afin de permettre l'insertion de l'élément de raccordement (9) et de l'obturateur (6) à l'intérieur du corps de soupape (2) et une étape d'engagement du capuchon (21) avec le corps de soupape (2) afin de définir une fermeture hermétique aux fluides de l'ouverture d'accès (20), éventuellement l'étape d'engagement du capuchon (21) du corps de soupape (2) fournissant l'interposition d'une bague d'étanchéité (22) ;
en particulier l'étape d'engagement de la portion supérieure (10) avec le corps de soupape (2) comprenant la sous-étape de logement de la même portion supérieure (10) à l'intérieur d'une/de l'assise d'articulation (16) délimitée par une/la projection (12) à l'intérieur du corps de soupape.
